# EUROPÄISCHE PATENTANMELDUNG

(11) **EP 2 933 162 A2**
(43) Veröffentlichungstag der Anmeldung: **21.10.2015**
(21) Anmeldenummer: 14004192.2
(22) Anmeldetag: 12.12.2014
(51) Int. Cl.: B60W 40/12

(54) **Verfahren und Vorrichtung zur verbrauchsoptimierten Steuerung eines Kraftfahrzeuges**

(30) Priorität: 13.12.2013 DE 102013021129
(71) Anmelder: Petters, Norbert, 18147 Rostock (DE)
(72) Erfinder: Petters, Norbert, 18147 Rostock (DE)

(57) **Zusammenfassung**

Die Erfindung betrifft ein Verfahren zur verbrauchsoptimierten Steuerung eines Kraftfahrzeuges, bei dem erfindungsgemäß geprüft wird, ob ein vorgegebener optimaler Betriebsmodus (B1) zur Steuerung des Kraftfahrzeugs aktiviert ist und ein Grenzwert (G) für einen Brennstoff-Durchschnittsverbrauch und/oder ein Grenzwert (G1) für eine Gasemission vorgegeben ist, wobei bei aktiviertem optimalen Betriebsmodus (B 1) und ermitteltem Grenzwert (G) für den Brennstoff-Durchschnittsverbrauch und/oder ermitteltem Grenzwert (G1) für die Gasemission das Kraftfahrzeug derart gesteuert wird, dass maximal der vorgegebene, insbesondere ein minimaler Grenzwert (G) für den Brennstoff-Durchschnittsverbrauch und/oder ein minimaler Grenzwert (G1) für die Gasemission verbraucht wird.

## Beschreibung

Die Erfindung betrifft ein Verfahren zur verbrauchsoptimierten Steuerung eines Kraftfahrzeuges. Des Weiteren betrifft die Erfindung eine Vorrichtung zur verbrauchsoptimierten Steuerung eines Kraftfahrzeugs.

Es sind verschiedene Steuersysteme für Kraftfahrzeuge bekannt, welche beispielsweise spezielle Getriebemodi aufweisen, mittels welcher eine Motorleistung optimal eingestellt wird. Solche Steuersysteme sind beispielsweise aus der DE 44 11 940 A1 bekannt.

Der Erfindung liegt die Aufgabe zu Grunde, ein verbessertes Verfahren zur verbrauchsoptimierten Steuerung eines Kraftfahrzeugs sowie eine verbesserte Vorrichtung zur verbrauchsoptimierten Steuerung des Kraftfahrzeugs anzugeben.

Hinsichtlich des Verfahrens wird die Aufgabe erfindungsgemäß durch die im Anspruch 1 angegebenen Merkmale gelöst. Hinsichtlich der Vorrichtung wird die Aufgabe durch die im Anspruch 9 angegebenen Merkmale gelöst.

Vorteilhafte Ausgestaltungen der Erfindung sind Gegenstand der Unteransprüche.

Beim erfindungsgemäßen Verfahren zur verbrauchsoptimierten Steuerung eines Kraftfahrzeuges, wird geprüft, ob ein vorgegebener optimaler Betriebsmodus zur Steuerung des Kraftfahrzeugs aktiviert ist und ein Grenzwert für einen Brennstoff-Durchschnittsverbrauch und/oder eine mit diesem zusammenhängende Gasemission vorgegeben ist, wobei bei aktiviertem optimalen Betriebsmodus und ermitteltem Grenzwert für den Brennstoff-Durchschnittsverbrauch und/oder Gasemission das Kraftfahrzeug derart gesteuert wird, dass maximal der vorgegebene Grenzwert für den Brennstoff-Durchschnittsverbrauch und/oder für die Gasemission verbraucht wird.

Die Vorteile der Erfindung liegen darin, dass durch die Steuerung des Kraftfahrzeugs in Abhängigkeit vom ermittelten Grenzwert für den Brennstoff-Durchschnittsverbrauch und/oder die Gasemission das Kraftfahrzeug mit optimalem, insbesondere reduziertem oder geringstem Brennstoffverbrauch und Schadstoffausstoß und somit besonders wirtschaftlich und Kosten sparend betrieben werden kann. Dabei kann der Fahrer des Kraftfahrzeugs individuell einen, insbesondere minimalen Grenzwert für den Brennstoff-Durchschnittsverbrauch und/oder die Gasemission vorgegeben.

Im Folgenden wird unter einer Gasemission ein mit dem Kohlenstoffdioxid-Ausstoß verstanden. Kohlenstoffdioxid oder Kohlendioxid ist eine chemische Verbindung aus Kohlenstoff und Sauerstoff, wobei das Kohlenstoffdioxid bei der Gasemission bzw. bei einer Verbrennung von kohlenstoffhaltigen Substanzen entsteht. Hierbei sind unter kohlenstoffhaltige Substanzen Brenn- und/oder Kraftstoffe, insbesondere Benzin, zu verstehen.

Um den Kohlenstoffdioxid-Ausstoß weitestgehend zu vermindern, insbesondere als Beitrag zum Umwelt- bzw. Klimaschutz, ist mittels einer Vorgabe des Brennstoff-Durchschnittsverbrauchs und/oder für die Gasemission eine Vorgabe eines durchschnittlichen Kohlenstoffdioxid-Ausstoßes möglich.

Das Kraftfahrzeug umfasst eine Antriebseinheit oder einen Antriebsmotor, insbesondere eine Brennkraftmaschine, wie eine gas- oder kraftstoffbetriebene Verbrennungsmaschine/-motor, oder eine Elektromaschine oder eine Kombination aus einer Brennkraft- und Elektromaschine/-motor.

In einer möglichen Ausführungsform wird der optimale Betriebsmodus manuell aktiviert und der Grenzwert für den Brennstoff-Durchschnittsverbrauch und/oder die Gasemission manuell vorgegeben. Beispielsweise wird der optimale Betriebsmodus mittels eines Schalters oder sprachgesteuert oder menügesteuert, zum Beispiel in einem Menü einer Bedieneinheit, aktiviert.

In einer möglichen weiteren Ausführungsform wird der optimale Betriebsmodus manuell aktiviert und ein Grenzwert für die Gasemission, insbesondere einen durchschnittlichen Kohlenstoffdioxid-Ausstoß, manuell vorgegeben. Kohlenstoffdioxid wird in Abhängigkeit einer Verbrennung eines Brenn- und/oder Kraftstoffes ausgestoßen, wobei mittels einer Aktivierung des optimalen Betriebsmodus der Grenzwert für den Brennstoff-Durchschnittsverbrauch und/oder für die Gasemission gleichzeitig einen Grenzwert für den durchschnittlichen Kohlenstoffdioxid-Ausstoß vorgibt.

Ein Grenzwert für solch einen Ausstoß bzw. für solch eine Emission liegt derzeitig bei maximal 120 Gramm pro Kilometer, wobei mittels des erfindungsgemäßen Verfahrens ein weitestgehend geringerer Ausstoß eingestellt werden kann. Hierbei kann insbesondere der Kohlenstoffdioxid-Ausstoß, auch als Schadstoffausstoß bezeichnet, gering gehalten werden, wodurch der Schadstoffausstoß weitestgehend verringert wird, um eine weitestgehend umweltfreundliche und verbrauchsoptimierte Nutzung des Kraftfahrzeuges zu ermöglichen.

Eine Weiterbildung der Erfindung sieht vor, dass der optimale Betriebsmodus automatisch aktiviert wird, wenn in einem vorgegebenen Überwachungszeitraum eine annähernd konstante Fahrweise identifiziert wird. Eine konstante Fahrweise wird insbesondere dann identifiziert, wenn sich das Kraftfahrzeug beispielsweise außerhalb einer Start- oder Kaltphase in einem normalen Betrieb während einer Stadt- oder Landfahrt befindet oder wenn das Kraftfahrzeug insbesondere weitgehend mit konstanter Geschwindigkeit und wenig oder nur geringen Geschwindigkeitsänderungen über den vorgegebenen Überwachungszeitraum fährt.

Vorteilhafterweise kann der Grenzwert für den Brennstoff-Durchschnittsverbrauch und/oder für die Gasemission im aktivierten optimalen Betriebsmodus geändert werden. Hierdurch kann der Fahrer des Kraftfahrzeugs den Brennstoffverbrauch seinen Bedürfnissen und Fahrgewohnheiten anpassen.

In einer weiteren vorteilhaften Weise kann der Grenzwert den durchschnittlichen Kohlenstoffdioxid-Ausstoß im aktivierten optimalen Betriebsmodus geändert werden, wodurch der Fahrer des Kraftfahrzeuges den Kohlenstoffdioxid-Ausstoß Umweltbedürfnissen und/oder als Beitrag zum Klimaschutz anpassen kann.

In einer weiteren Ausführungsform der Erfindung wird eine Aktivierung des optimalen Betriebsmodus ausgegeben. Alternativ oder zusätzlich werden bzw. wird der vorgegebene Grenzwert für den Brennstoff-Durchschnittsverbrauch und ein ermittelter momentaner Ist-Brennstoff-Durchschnittsverbrauch und/oder die Gasemission und eine ermittelte momentane Ist-Gasemission ausgegeben. Dies ermöglicht dem Fahrer des Kraftfahrzeugs die Aktivierung des optimalen Betriebsmodus und den momentan eingestellten Grenzwert für den Brennstoff-Durchschnittsverbrauch (Soll-Brennstoff-Durchschnittsverbrauch) und/oder für die Gasemission (Soll-Gasemission) zu überwachen und bei Bedarf erneut zu ändern bzw. anzupassen.

Zudem werden bzw. wird alternativ oder zusätzlich der vorgegebene Grenzwert für die Gasemission, insbesondere den durchschnittlichen Kohlenstoffdioxid-Ausstoß und/oder ein ermittelter momentaner durchschnittlicher Ist-Kohlenstoffdioxid-Ausstoß ausgegeben, wobei eine solche Ausgabe eine Ausgabeeinheit, insbesondere eine Anzeige einer so genannten Energiespar- und/oder Schadstoffklasse, vorsieht, wobei beispielsweise diese Anzeige den durchschnittlichen Kohlenstoffdioxid-Ausstoß so genannten Schadstoffklassen zu ordnet. Dabei kann der Fahrer den Kohlenstoffdioxid-Ausstoß ändern bzw. anpassen. Hierbei ist eine Steigerung eines Umweltbewusstseins möglich, wobei der Fahrer über die Anzeige der Schadstoffklasse auf einen durchschnittlichen Kohlenstoffdioxid-Ausstoß aufmerksam gemacht wird.

Darüber hinaus wird anhand von Sensorsignalen mindestens eine Aggregate-Kenngröße, insbesondere ein Energieverbrauch, mindestens eines aktiven Aggregats, insbesondere einer Lichtmaschine, einer Heckscheibenheizung, einer Frontscheibenheizung, einer Klimaanlage, einer Wärmepumpe, eines Wärmetauschers, eines Klimakompressors, eines Ventilators ermittelt, wobei gegebenenfalls bei aktiviertem optimalen Betriebsmodus die mindestens eine Aggregate-Kenngröße des mindestens einen aktiven Aggregats in Abhängigkeit vom vorgegebenen Grenzwert für den Brennstoff-Durchschnittsverbrauch und/oder für die Gasemission verändert oder angepasst wird. Dabei wird bei einem zu hohen Energieverbrauch das betreffende Aggregat, wenn dieses für den normalen Betrieb des Kraftfahrzeugs nicht notwendig ist, ausgeschaltet oder alternativ derart gesteuert, dass der Energieverbrauch reduziert wird. Insbesondere können bei einer hohen Anzahl von aktiven Aggregaten nicht betriebsnotwendige Aggregate, wie eine Sitzheizung, deaktiviert oder ausgeschaltet werden. Eine solche Ausschaltung oder Deaktivierung nicht betriebsnotwendiger Aggregate reduziert den Energiebedarf und somit den Brennstoffverbrauch des Kraftfahrzeugs infolge der Reduzierung der Belastung der Antriebseinheit durch die Reduzierung der Anzahl aktiver Aggregate.

Eine weitere Ausführungsform sieht vor, dass anhand von Sensorsignalen mindestens eine Leistungskenngröße eines Antriebsstrangs, insbesondere ein Motormoment, eine Leistung, eine Drehzahl einer Antriebseinheit, wie eines Antriebsmotors des Kraftfahrzeugs, ermittelt wird, wobei gegebenenfalls bei aktiviertem optimalen Betriebsmodus die mindestens eine Leistungskenngröße in Abhängigkeit vom vorgegebenen Grenzwert für den Brennstoff-Durchschnittsverbrauch und/oder für die Gasemission verändert oder angepasst wird. Beispielsweise kann ein Leistungssteuerorgan, z. B. eine Drosselklappe, reduziert betätigt werden oder derart betätigt werden, dass die Stellung des Leistungssteuerorgans beibehalten wird oder so verändert wird, dass die Leistung der Antriebseinheit konstant oder annähernd konstant gehalten wird.

Die erfindungsgemäße Vorrichtung zur verbrauchsoptimierten Steuerung eines Kraftfahrzeuges umfasst eine Aktivierungseinheit zur Aktivierung eines optimalen Betriebsmodus zur Steuerung des Kraftfahrzeugs, eine Eingabeeinheit zur Vorgabe eines Grenzwerts für einen Brennstoff-Durchschnittsverbrauch und/oder für die Gasemission sowie ein Steuergerät, das derart eingerichtet ist, zu prüfen, ob der vorgegebene optimale Betriebsmodus zur Steuerung des Kraftfahrzeugs aktiviert ist und der Grenzwert für einen Brennstoff-Durchschnittsverbrauch und/oder für die Gasemission vorgegeben ist, wobei bei aktiviertem optimalen Betriebsmodus und ermitteltem Grenzwert für den Brennstoff-Durchschnittsverbrauch und/oder für die Gasemission das Steuergerät derart eingerichtet ist, das Kraftfahrzeug derart zu steuern, dass maximal der vorgegebene Grenzwert für den Brennstoff-Durchschnittsverbrauch und/oder für die Gasemission verbraucht wird. Hierdurch ist sichergestellt, dass der Fahrer des Kraftfahrzeugs individuell den Verbrauch des Kraftfahrzeugs beeinflussen kann, indem der Fahrer des Kraftfahrzeugs individuell einen, insbesondere minimalen Grenzwert für den Brennstoff-Durchschnittsverbrauch als Soll-Brennstoff-Durchschnittsverbrauch und/oder für die Gasemission als Soll-Gasemission vorgeben kann.

Darüber hinaus umfasst die Vorrichtung mindestens eine Sensoreinheit zur Erfassung mindestens einer Aggregate-Kenngröße mindestens eines Aggregats und/oder mindestens einer Leistungskenngröße eines Antriebsmotors.

Ausführungsbeispiele der Erfindung werden im Folgenden anhand einer Zeichnung näher erläutert.

Darin zeigt:

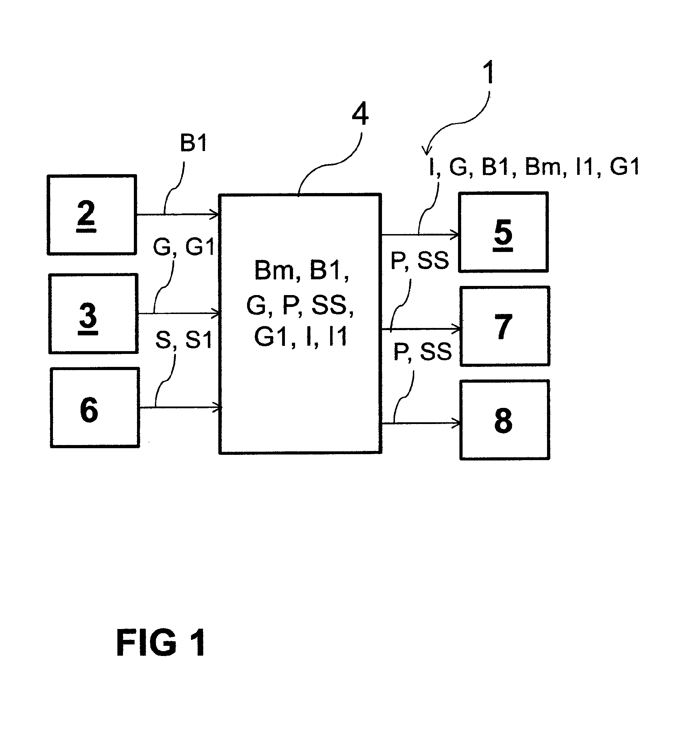

- Figur 1: schematisch eine Vorrichtung zur verbrauchsoptimierten Steuerung eines Kraftfahrzeugs.

Die einzige **Figur 1** zeigt schematisch eine Vorrichtung 1 zur verbrauchsoptimierten Steuerung eines nicht näher dargestellten Kraftfahrzeugs.

Die Vorrichtung 1 umfasst eine Aktivierungseinheit 2 zur Aktivierung eines optimalen Betriebsmodus zur Steuerung des Kraftfahrzeugs, mindestens eine Eingabeeinheit 3 zur Vorgabe eines Grenzwerts G für einen Brennstoff-Durchschnittsverbrauch und/oder eines Grenzwerts G1 für eine Gasemission sowie ein Steuergerät 4 zur Steuerung des Kraftfahrzeugs in mindestens einem Betriebsmodus Bm.

Zur besseren Beschreibung wird im Folgenden unter der Gasemission ebenfalls ein mit der Gasemission zusammenhängender Kohlenstoffdioxid-Ausstoß verstanden. Kohlenstoffdioxid oder Kohlendioxid ist eine chemische Verbindung aus Kohlenstoff und Sauerstoff, wobei das Kohlenstoffdioxid der Gasemission bzw. bei einer Verbrennung von kohlenstoffhaltigen Substanzen entsteht. Hierbei sind unter kohlenstoffhaltige Substanzen Brenn- und/oder Kraftstoffe, insbesondere Benzin, zu verstehen.

Um den Kohlenstoffdioxid-Ausstoß weitestgehend zu vermindern, insbesondere als Beitrag zum Umwelt- bzw. Klimaschutz, ist mittels der Vorgabe des Brennstoff-Durchschnittsverbrauchs und/oder der Gasemission eine Vorgabe eines durchschnittlichen Kohlenstoffdioxid-Ausstoßes möglich.

Das Kraftfahrzeug umfasst in nicht näher dargestellter Art und Weise eine Antriebseinheit oder einen Antriebsmotor, insbesondere eine Brennkraftmaschine, wie eine gas- oder kraftstoffbetriebene Verbrennungsmaschine/-motor, oder eine Elektromaschine oder eine Kombination aus einer Brennkraft- und Elektromaschine/-motor.

Des Weiteren umfasst die Vorrichtung 1 mindestens eine Ausgabeeinheit 5. Als Ausgabeeinheit 5 sind bzw. ist beispielsweise eine Anzeige in einer Armatur und/oder ein Lautsprecher vorgesehen.

Ferner umfasst die Vorrichtung 1 mindestens eine Sensoreinheit 6 zur Erfassung mindestens einer Aggregate-Kenngröße mindestens eines Aggregats 7 des Kraftfahrzeugs und/oder mindestens einer Leistungskenngröße eines Antriebsstrangs 8, wobei diese Kenngrößen als Sensorsignale S dem Steuergerät 4 zur weiteren Verarbeitung und zur Steuerung des Kraftfahrzeugs in dem mindestens einem Betriebsmodus Bm zugeführt werden.

Die Aktivierungseinheit 2 ist in der einfachen Ausführungsform in nicht näher dargestellter Art und Weise als ein Schalter oder ein Betätigungselement am Lenkrad und/oder an einer Armatur des Kraftfahrzeugs ausgebildet. Dabei kann mittels der Aktivierungseinheit 2 als der mindestens eine Betriebsmodus Bm ein optimaler Betriebsmodus B1 manuell aktiviert oder deaktiviert werden. In einer alternativen Ausführungsform ist die Aktivierungseinheit 2 als eine Bedienfunktion einer Sprachsteuerung und/oder als ein Menüpunkt einer menügeführten Bedienung beispielsweise eines Tastbildschirms ausgeführt.

Die Eingabeeinheit 3 ist insbesondere eine Taste oder ein Betätigungselement am Lenkrad und/oder an einer Armatur des Kraftfahrzeugs und/oder ein Mikrofon einer Sprachsteuerung. Die Eingabeeinheit 3 dient insbesondere der manuellen Eingabe eines Grenzwerts G für den Brennstoff-Durchschnittsverbrauch als Soll-Brennstoff-Durchschnittsverbrauch und/oder eines Grenzwerts G1 für die Gasemission als Soll-Gasemission.

Das Steuergerät 4 ist für eine verbrauchsoptimierte Steuerung des Kraftfahrzeuges derart eingerichtet, dass geprüft wird, ob als ein Betriebsmodus Bm ein vorgegebener optimaler Betriebsmodus B1 zur Steuerung des Kraftfahrzeugs aktiviert ist und ein Grenzwert G für einen Brennstoff-Durchschnittsverbrauch und/oder ein Grenzwert G1 für eine Gasemission vorgegeben ist, wobei bei aktiviertem optimalen Betriebsmodus B1 und ermitteltem Grenzwert G für den Brennstoff-Durchschnittsverbrauch und/oder ermitteltem Grenzwert G1 für die Gasemission das Kraftfahrzeug derart gesteuert wird, dass maximal der vorgegebene Grenzwert G für den Brennstoff-Durchschnittsverbrauch und/oder maximal der vorgegebene Grenzwert G1 für die Gasemission verbraucht wird.

Mit anderen Worten: Mittels des Steuergeräts 4 wird das Kraftfahrzeug derart gesteuert, dass ein ermittelter Ist-Brennstoff-Durchschnittsverbrauch maximal dem vorgegebenen Grenzwert G für den Brennstoff-Durchschnittsverbrauch und/oder eine ermittelte Ist-Gasemission maximal dem vorgegebenen Grenzwert G1 für die Gasemission und somit einem vorgegebenen Sollverbrauch und/oder einer Sollemission entspricht.

Dazu wird mindestens ein Parameter P und/oder eine Stellgröße SS des mindestens einen Aggregats 7 und/oder des Antriebsstrangs 8 des Kraftfahrzeugs entsprechend eingestellt.

Hierzu wird anhand von Sensorsignalen S, die dem Steuergerät 4 zur weiteren Verarbeitung zugeführt werden, mindestens eine Aggregate-Kenngröße, insbesondere ein Energieverbrauch, mindestens eines aktiven Aggregats 7, insbesondere ein elektrischer und/oder hydraulischer Verbraucher bestimmt. Beispielsweise wird identifiziert, welche Aggregate 7 des Kraftfahrzeugs aktiviert und im Betrieb sind. Darüber hinaus wird der momentane Energieverbrauch mindestens eines aktiven Aggregats 7 ermittelt. Beispielsweise wird der momentane Energieverbrauch einer Lichtmaschine, einer Heckscheibenheizung, einer Frontscheibenheizung, einer Klimaanlage, einer Wärmepumpe, eines Wärmetauschers, eines Klimakompressors, eines Ventilators und/oder anderer aktiver Aggregate 7 ermittelt.

Anhand der ermittelte/n Aggregate-Kenngröße/n und/oder Leistungskenngrößen wird dann mittels des Steuergeräts 4 unter Berücksichtigung des vorgegebenen Grenzwerts G des Brennstoff-Durchschnittsverbrauchs und des ermittelten momentanen Ist-Brennstoff-Durchschnittsverbrauchs I gegebenenfalls, insbesondere bei einer Differenz zwischen dem Grenzwert G und dem Ist-Brennstoff-Durchschnittsverbrauch I, zumindest ein einzustellender Parameter P und/oder eine einzustellende Stellgröße SS zur Einstellung und/oder Steuerung des/der Aggregats/e 7 bzw. des Antriebsstrangs 8 erzeugt. Solch eine Vorgehensweise gilt ebenfalls unter Berücksichtigung des vorgegebenen Grenzwerts G1 der Gasemission und der ermittelten momentanen Ist-Gasemission I1.

Mit anderen Worten: das Steuergerät 4 ist derart eingerichtet, dass bei identifiziertem aktivierten optimalen Betriebsmodus B1 gegebenenfalls die mindestens eine Aggregate-Kenngröße des mindestens einen aktiven Aggregats 7 in Abhängigkeit vom vorgegebenen Grenzwert G für den Brennstoff-Durchschnittsverbrauch und/oder vom vorgegebenen Grenzwert G1 der Gasemission verändert oder angepasst wird.

So kann beispielsweise eine Lichtmaschine oder eine Heckscheibenheizung in einen Sparbetrieb geschaltet werden, in welchem der Energieverbrauch deutlich reduziert ist, wodurch der Brennstoff-Durchschnittsverbrauch und/oder die Gasemission gesenkt wird bzw. werden.

Darüber hinaus wird beispielsweise bei einem zu hohen Energieverbrauch das betreffende Aggregat 7, wenn dieses für den normalen Betrieb des Kraftfahrzeugs nicht notwendig ist, ausgeschaltet oder alternativ derart gesteuert, dass der Energieverbrauch reduziert wird. Alternativ oder zusätzlich können bei einer hohen Anzahl von aktiven Aggregaten 7 mittels des Steuergeräts 4 nicht betriebsnotwendige Aggregate 7, wie eine Sitzheizung, deaktiviert oder ausgeschaltet werden.

Ferner können weitere Aggregate 7, wie ein- oder ausfahrbare Anbauteile am Kraftfahrzeug, derart positioniert, insbesondere eingefahren, werden, dass diese die Aerodynamik des Kraftfahrzeugs optimieren, insbesondere den Luftwiderstand des Kraftfahrzeugs reduzieren. Eine solche Neupositionierung, Ausschaltung und/oder Deaktivierung nicht betriebsnotwendiger Aggregate 7 reduziert den Energiebedarf und somit den Brennstoffverbrauch und/oder die damit verbundene Gasemission des Kraftfahrzeugs infolge der Reduzierung der Belastung der Antriebseinheit durch die Reduzierung der Anzahl aktiver Aggregate 7.

Alternativ oder zusätzlich wird anhand von weiteren, dem Steuergerät 4 zur weiteren Verarbeitung zugeführten Sensorsignalen S mindestens eine Leistungskenngröße des Antriebsstrangs 8, insbesondere ein Motormoment, eine Leistung, eine Drehzahl einer Antriebseinheit, wie eines Antriebsmotors des Kraftfahrzeugs, ermittelt.

Dabei ist das Steuergerät 4 derart eingerichtet, dass bei identifiziertem aktivierten optimalen Betriebsmodus B1 die mindestens eine Leistungskenngröße in Abhängigkeit vom vorgegebenen Grenzwert G für den Brennstoff-Durchschnittsverbrauch und/oder vom vorgegebenen Grenzwert G1 der Gasemission verändert oder angepasst wird. Beispielsweise kann ein Leistungssteuerorgan, zum Beispiel eine Drosselklappe, reduziert betätigt oder derart betätigt werden, dass die Stellung des Leistungssteuerorgans beibehalten wird oder so verändert wird, dass die Leistung der Antriebseinheit konstant oder annähernd konstant gehalten wird.

Ferner kann bei aktiviertem Allrad-Antrieb dieser bei einer anhand der Sensorsignale S identifizierten Stadt- oder Landfahrt der Allrad-Antrieb deaktiviert werden. Auch kann mittels des Steuergeräts 4 anhand der erfassten Sensorsignale ein Zustand eines Fahrwerks ermittelt werden. Ist beispielsweise das Kraftfahrzeug in eine hohe Position gestellt, so wird bei aktiviertem optimalen Betriebsmodus B1 und bei noch vorhandener und mittels des Steuergeräts 4 ermittelter Abweichung oder Differenz des Ist-Brennstoff-Durchschnittsverbrauchs I vom vorgegebenen Grenzwert G des Brennstoff-Durchschnittsverbrauchs (= Soll-Brennstoff-Durchschnittsverbrauch) das Fahrwerk des Kraftfahrzeugs herunter gestellt, so dass der Luftwiderstand und somit die Aerodynamik des Kraftfahrzeugs verbessert werden. Diese Vorgehensweise gilt ebenfalls bei aktiviertem optimalen Betriebsmodus B1 und bei noch vorhandener und mittels des Steuergeräts 4 ermittelter Abweichung oder Differenz der Ist-Gasemission I1 vom vorgegebenen Grenzwert G1 der Gasemission (=Soll-Gasemission).

Eine weitere Ausführungsform sieht vor, dass der optimale Betriebsmodus B1 manuell mittels der Aktivierungseinheit 2 aktiviert und der Grenzwert G für den

Brennstoff-Durchschnittsverbrauch und/oder die Gasemission manuell mittels der Eingabeeinheit 3 vorgegeben wird. Dabei können die Aktivierungseinheit 2 und die Eingabeeinheit 3 als separate Elemente oder als ein Multifunktionsschalter oder als ein Multifunktionsmenü einer Bedieneinheit, wie eines Tastbildschirms, ausgebildet sein.

Ferner kann das Steuergerät 4 derart eingerichtet sein, dass der optimale Betriebsmodus B1 automatisch aktiviert wird, wenn in einem vorgegebenen Überwachungszeitraum eine annähernd konstante Fahrweise des Kraftfahrzeugs identifiziert wird. Eine konstante Fahrweise wird insbesondere dann identifiziert, wenn sich das Kraftfahrzeug beispielsweise außerhalb einer Start- oder Kaltphase in einem normalen Betrieb während einer Stadt- oder Landfahrt befindet oder wenn das Kraftfahrzeug insbesondere weitgehend mit konstanter Geschwindigkeit und wenig oder nur geringen Geschwindigkeitsänderungen über den vorgegebenen Überwachungszeitraum fährt.

Weiterhin wird mittels des Steuergeräts 4 das Kraftfahrzeug derart gesteuert, dass die ermittelte momentane Ist-Gasemission I1, insbesondere ein ermittelter durchschnittlicher Ist-Kohlenstoffdioxid-Ausstoß, maximal einem vorgegebenen Grenzwert G1 für die Gasemission bzw. den durchschnittlichen Kohlenstoffdioxid-Ausstoß und somit einer vorgegebenen Soll-Gasemission bzw. Sollausstoß entspricht.

Weiterhin wird anhand von weiteren, dem Steuergerät 4 zur weiteren Verarbeitung zugeführten Sensorsignalen S1 zumindest eine Kohlenstoffdioxid-Ausstoßgröße in Abhängigkeit des Brennstoff-Durchschnittsverbrauchs und/oder der Gasemission ermittelt.

Vorzugsweise wird der Kohlenstoffdioxid-Ausstoß mittels der Sensoreinheit 6 erfasst, wobei zusätzlich auch eine weitere Sensoreinheit zur Erfassung des Kohlenstoffdioxid-Ausstoßes vorgesehen sein kann.

Zusätzlich dient die Eingabeeinheit 3 insbesondere der manuellen Eingabe eines Grenzwerts G1 für einen durchschnittlichen Kohlenstoffdioxid-Ausstoß als durchschnittlicher Kohlenstoffdioxid-Ausstoß-Sollwert, wobei Kohlenstoffdioxid in Verbindung mit einer chemischen Oxidation während einer Gasemission ausgestoßen wird. Mittels einer Aktivierung des optimalen Betriebsmodus B1 für den Brennstoff-Durchschnittsverbrauch und/oder die Gasemission wird gleichzeitig der Grenzwert G1 für die Gasemission bzw. den durchschnittlichen Kohlenstoffdioxid-Ausstoß vorgegeben.

In dieser zusätzlichen Ausführungsform ist mittels der Ausgabeeinheit 5, insbesondere einer Ausgabe einer so genannten Energiespar- und/oder Schadstoffklasse für ein Brennstoff-Durchschnittsverbrauch und/oder die Gasemission, insbesondere einen Kohlenstoffdioxid-Ausstoß und/oder einen in der Armatur und/oder mittels zumindest eines Lautsprechers vorgesehen.

Zusätzlich kann bei einer automatischen Aktivierung des optimalen Betriebsmodus B1 diese Aktivierung mittels einer Eingabe des Fahrers des Kraftfahrzeugs über die Eingabeeinheit 3 und/oder die Aktivierungseinheit 2 bestätigt oder deaktiviert werden.

Zur Anpassung des Brennstoffverbrauchs und/oder der Gasemission des Fahrzeugs an Wünsche, Bedürfnisse und Fahrgewohnheiten des Fahrers kann der vorgegebene Grenzwert G für den Brennstoff-Durchschnittsverbrauch und/oder der vorgegebene Grenzwert G1 für die Gasemission auch im aktivierten optimalen Betriebsmodus B1 über eine Eingabe an der Eingabeeinheit 3 geändert werden. Der eingestellte oder geänderte Grenzwert G kann darüber hinaus auf der Ausgabeeinheit 5 ausgegeben, insbesondere angezeigt werden, so dass der Fahrer des Kraftfahrzeugs eine Rückmeldung über den momentan eingestellten oder vorgegebenen Grenzwert G für die Brennstoff-Durchschnittsverbrauch und/oder den Grenzwert G1 der Gasemission hat.

Alternativ oder zusätzlich kann ein ermittelter momentaner Ist-Brennstoff-Durchschnittsverbrauch I und/oder eine ermittelte momentane Ist-Gasemission I1 ausgegeben, insbesondere angezeigt, werden.

Ferner kann zusätzlich eine Rückmeldung über die Aktivierung des optimalen Betriebsmodus B1 auf der Ausgabeeinheit 5 ausgegeben, insbesondere angezeigt, werden.

Somit ist der Fahrer bei Ausgabe einer Information sowohl über die Aktivierung des optimalen Betriebsmodus B1 als auch über den momentan eingestellten Grenzwert G und den momentan ermittelten Ist-Brennstoff-Durchschnittsverbrauchs I und/oder über den momentan eingestellten Grenzwert G1 und die momentan ermittelte Ist-Gasemission I1 stets über die aktuellen Verbrauchswerte und Betriebszustände informiert und kann zusätzlich sein Fahrverhalten für eine noch weitere Reduzierung des Brennstoffverbrauchs und/oder den vorzugebenen Grenzwert G für den Brennstoff-Durchschnittsverbrauch und/oder den vorzugebenen Grenzwert G1 der Gasemission anpassen.

Dies ermöglicht dem Fahrer des Kraftfahrzeugs die Aktivierung des optimalen Betriebsmodus B1 und den momentan eingestellten Grenzwert G für den Brennstoff-Durchschnittsverbrauch und/oder den momentan eingestellten Grenzwert G1 der Gasemission zu überwachen und bei Bedarf erneut zu ändern bzw. anzupassen.

Die Vorteile der Erfindung liegen darin, dass durch die Steuerung des Kraftfahrzeugs in Abhängigkeit vom ermittelten Grenzwert G für den Brennstoff-Durchschnittsverbrauch und/oder vom ermittelten Grenzwert G1 der Gasemission das Kraftfahrzeug mit optimalem, insbesondere reduziertem oder geringstem Brennstoffverbrauch, reduzierten Gasemission und Schadstoffausstoß und somit besonders wirtschaftlich und Kosten sparend betrieben werden kann.

Zudem liegt ein Vorteil darin, dass mittels dem Grenzwert G1 der Gasemission bzw. des Kohlenstoffdioxid-Ausstoßes eine Steigerung eines Umweltbewusstseins möglich ist, wobei der Fahrer über die Anzeige der Energiespar- und/oder Schadstoffklasse auf den durchschnittlichen Kohlenstoffdioxid-Ausstoß aufmerksam gemacht wird und dementsprechend den Kohlenstoffdioxid-Ausstoß weitestgehend verringern bzw. ändern kann.

### BEZUGSZEICHENLISTE

- 1: Vorrichtung zur verbrauchsoptimierten Steuerung
- 2: Aktivierungseinheit
- 3: Eingabeeinheit
- 4: Steuergerät
- 5: Ausgabeeinheit
- 6: Sensoreinheit
- 7: Aggregat
- 8: Antriebsstrang
- B: Betriebsmodus
- B1: optimaler Betriebsmodus
- G: Grenzwert für Brennstoff-Durchschnittsverbrauch
- G1: Grenzwert für Gasemission
- I: Ist-Brennstoff-Durchschnittsverbrauch
- I1: Ist-Gasemission
- P: Parameter
- S: Sensorsignal
- S1: Weiteres Sensorsignal
- SS: Stellgröße

## Patentansprüche

1. Verfahren zur verbrauchsoptimierten Steuerung eines Kraftfahrzeuges,
**dadurch gekennzeichnet, dass** geprüft wird, ob ein vorgegebener optimaler Betriebsmodus (B1) zur Steuerung des Kraftfahrzeugs aktiviert ist und ein Grenzwert (G) für einen Brennstoff-Durchschnittsverbrauch und/oder ein Grenzwert (G1) für eine Gasemission vorgegeben ist, wobei bei aktiviertem optimalen Betriebsmodus (B1) und ermitteltem Grenzwert (G) für den Brennstoff-Durchschnittsverbrauch und/oder ermitteltem Grenzwert (G1) für die Gasemission das Kraftfahrzeug derart gesteuert wird, dass maximal der vorgegebene, insbesondere ein minimaler Grenzwert (G) für den Brennstoff-Durchschnittsverbrauch und/oder ein minimaler Grenzwert (G1) verbraucht wird.

2. Verfahren nach Anspruch 1, **dadurch gekennzeichnet, dass** der optimale Betriebsmodus (B1) manuell aktiviert wird und der Grenzwert (G) für den Brennstoff-Durchschnittsverbrauch manuell vorgegeben wird.

3. Verfahren nach Anspruch 1 oder 2, **dadurch gekennzeichnet, dass** der optimale Betriebsmodus (B1) manuell aktiviert wird und der Grenzwert (G1) für die Gasemission, insbesondere einen durchschnittlichen Kohlenstoffdioxid-Ausstoß, manuell vorgegeben wird.

4. Verfahren nach einem der vorhergehenden Ansprüche, **dadurch gekennzeichnet, dass** der optimale Betriebsmodus (B1) automatisch aktiviert wird, wenn in einem vorgegebenen Überwachungszeitraum eine annähernd konstante Fahrweise identifiziert wird.

5. Verfahren nach einem der vorhergehenden Ansprüche, **dadurch gekennzeichnet, dass** der Grenzwert (G) für den Brennstoff-Durchschnittsverbrauch im aktivierten optimalen Betriebsmodus (B1) geändert wird.

6. Verfahren nach einem der vorhergehenden Ansprüche, **dadurch gekennzeichnet, dass** der Grenzwert (G1) für die Gasemission im aktivierten optimalen Betriebsmodus (B1) geändert wird.

7. Verfahren nach einem der vorhergehenden Ansprüche, **dadurch gekennzeichnet, dass** eine Aktivierung des optimalen Betriebsmodus (B 1) ausgegeben wird.

8. Verfahren nach einem der vorhergehenden Ansprüche, **dadurch gekennzeichnet, dass** der vorgegebene Grenzwert (G) für den Brennstoff-Durchschnittsverbrauch und/oder ein ermittelter momentaner Ist-Brennstoff-Durchschnittsverbrauch (I) ausgegeben werden bzw. wird.

9. Verfahren nach einem der vorhergehenden Ansprüche, **dadurch gekennzeichnet, dass** der vorgegebene Grenzwert (G1) für die Gasemission und/oder eine ermittelte momentane Ist-Gasemission (I1), insbesondere ein Ist-Kohlenstoffdioxid-Ausstoß, ausgegeben werden bzw. wird.

10. Verfahren nach einem der vorhergehenden Ansprüche, **dadurch gekennzeichnet, dass** anhand von Sensorsignalen (S) und/oder weiteren Sensorsignalen (S1) mindestens eine Aggregate-Kenngröße aktiver Aggregate (7), insbesondere einer Lichtmaschine, einer Heckscheibenheizung, einer Frontscheibenheizung, einer Klimaanlage, einer Wärmepumpe, eines Wärmetauschers, eines Klimakompressors, eines Ventilators, ermittelt wird, wobei bei aktiviertem optimalen Betriebsmodus (B1) die mindestens eine Aggregate-Kenngröße in Abhängigkeit vom vorgegebenen Grenzwert (G) für den Brennstoff-Durchschnittsverbrauch und/oder vorgegebenen Grenzwert (G1) für die Gasemission verändert oder angepasst wird.

11. Verfahren nach einem der vorhergehenden Ansprüche, **dadurch gekennzeichnet, dass** anhand von Sensorsignalen (S) und/oder weiteren Sensorsignalen (S1) mindestens eine Leistungskenngröße eines Antriebsstrangs (8), insbesondere ein Motormoment, eine Leistung, eine Drehzahl eines Antriebsmotors des Kraftfahrzeugs, ermittelt wird, wobei bei aktiviertem optimalen Betriebsmodus (B1) die mindestens eine Leistungskenngröße in Abhängigkeit vom vorgegebenen Grenzwert (G) für den Brennstoff-Durchschnittsverbrauch und/oder vorgegebenen Grenzwert (G1) für die Gasemission verändert oder angepasst wird.

12. Vorrichtung (1) zur verbrauchsoptimierten Steuerung eines Kraftfahrzeuges, **gekennzeichnet durch**
- eine Aktivierungseinheit (2) zur Aktivierung eines optimalen Betriebsmodus (B1) zur Steuerung des Kraftfahrzeugs,
- eine Eingabeeinheit (3) zur Vorgabe eines Grenzwerts (G) für einen Brennstoff-Durchschnittsverbrauch und/oder
- zur Vorgabe eines Grenzwerts (G1) für eine Gasemission sowie
- ein Steuergerät (4), das derart eingerichtet ist, zu prüfen, ob der vorgegebene optimale Betriebsmodus (B1) zur Steuerung des Kraftfahrzeugs aktiviert ist und der Grenzwert (G) für einen Brennstoff-Durchschnittsverbrauch und/oder der Grenzwert (G1) für eine Gasemission vorgegeben ist, wobei bei aktiviertem optimalen Betriebsmodus (B1) und ermitteltem Grenzwert (G) für den Brennstoff-Durchschnittsverbrauch und/oder ermitteltem Grenzwert (G1) für die Gasemission das Steuergerät (4) derart eingerichtet ist, das Kraftfahrzeug derart zu steuern, dass maximal der vorgegebene, insbesondere ein minimaler Grenzwert (G) für den Brennstoff-Durchschnittsverbrauch und/oder ein minimaler Grenzwert (G1) für die Gasemission verbraucht wird.

13. Vorrichtung nach Anspruch 12,
**gekennzeichnet durch** mindestens eine Sensoreinheit (6) zur Erfassung mindestens einer Aggregate-Kenngröße mindestens eines Aggregats (7) und/oder mindestens einer Leistungskenngröße eines Antriebsstrangs (8).
